# EUROPÄISCHE PATENTSCHRIFT

(11) **EP 1 494 248 B1**
(45) Veröffentlichungstag und Bekanntmachung des Hinweises auf die Patenterteilung: **11.07.2007**
(21) Anmeldenummer: 04011060.3
(22) Anmeldetag: 10.05.2004
(51) Int. Cl.: H01B 3/30, F16L 11/04, H01B 7/02

(54) **Isolierhülse mit Schlitz**
Insulating sleeve with slit
Manchon isolant avec fente

(30) Priorität: 09.05.2003 DE 20307300 U
(43) Veröffentlichungstag der Anmeldung: 05.01.2005
(73) Patentinhaber: Uniwell Wellrohr GmbH, 96106 Ebern (DE)
(72) Erfinder: Fischer, Helmuth, 96106 Ebern (DE); Loch, Roland, 96106 Ebern (DE)
(74) Vertreter: Schuhmann, Albrecht

(56) Entgegenhaltungen:
- AU-B- 615 807
- DE-A- 3 927 626
- US-A1- 2003 029 514

## Beschreibung

Die vorliegende Erfindung betrifft einen Isolierschlauch mit Schlitz.

Es ist bekannt, Isolierschläuche aus einem thermoplastischen Material herzustellen, die zur leichtern Handhabung einen Längsschlitz aufweisen, da so Kabel oder Leitungen, bzw. Adern an beliebigen Stellen von der Seite her eingeführt werden können. Da bei solchen Längsschlitzen die Kabel/Leitungen durch den Schlitz heraustreten können, werden die Schläuche häufig umwickelt. Dies erfordert zusätzlichen Arbeitsaufwand.

EP 0 889 566 A1 offenbart einen Isolierschlauch aus Polyethylen mit einem durchgehenden Längsschlitz, wobei die Kanten des Schlitzes sich überlappen.

Aufgabe der vorliegenden Erfindung ist es, einen Isolierschlauch mit Schlitz zu schaffen, der ohne zusätzliche Umwicklung das Austreten von Kabeln/Leitungen verhindert und die eigentliche Funktion, nämlich den Schutz der geführten Kabel/Leitungen vor Abrieb und mechanischer Beeinflussung sicherstellt.

Diese Aufgabe wird mit den Merkmalen des kennzeichnenden Teils des Anspruchs 1 gelöst. Fortbildungen und vorteilhafte Ausführungen der Erfindung sind in den weiteren Ansprüchen umfasst.

Erfindungsgemäß ist ein Isolierschlauch aus einem Kunststoffmaterial mit einem achsparallelen, durchgehenden Längsschlitz dadurch gekennzeichnet, dass der Isolierschlauch elastisch und formstabil ausgeführt ist und dass der Längsschlitz durch einen Abschnitt des Isolierschlauchs in einen Bereich von mindestens 30° bis zu 360° überlappt wird. Vorzugsweise weist der Überlappungsbereich eine konstante Breite auf.

Im Überlappungsbereich sind Haftmittel zwischen der Unterseite des Überlappungsabschnitts und der Oberseite des Isolierschlauchs angeordnet. Die Haftmittel können selbsthaftend oder durch Druck haftend ausgeführt sein. Zum Beispiel bestehen die Haftmittel ein Klettverschluss sind oder anderweitig aus Haken, Krallen, Ösen oder Schlingen. Eine Alternative sind miteinander haftende Filz-, Gewirke- oder Gewebeschichten. Außerdem können die Haftmittel aus lösbaren Kleberschichten bestehen, wie sie von Notizzetteln grundsätzlich her bekannt sind.

Vorteilhafterweise sind die Haftmittel wenigstens an einer Seite in einer Breite ausgeführt, dass verschiedene Durchmesser des Isolierschlauchs einstellbar sind. Dabei muss die Haltekraft der Haftmittel jedoch die elastische Rückstellkraft des thermoplastischen Kunststoffmaterials überwinden.

Der Isolierschlauch kann aus einem geschlitzten, thermoplastisch verformten extrudierten Schlauch bestehen, jedoch auch aus einem thermoplastisch verformten Streifenmaterial. Im ersteren Fall wird der Isolierschlauch extrudiert, danach geschlitzt und auf den kleineren Durchmesser eingedreht Im zweiten Fall wird der Isolierschlauch aus einem Flachmaterial verformt. Nach einer bevorzugten Ausführung der Erfindung ist der Isolierschlauch spiralförmig eingedreht. Das verwendete thermoplastische Material ist vorzugsweise ein Polyurethan. Es können aber auch andere Materialien wie PVC, Polyethylen usw. verwendet werden.

Im Folgenden wird die Erfindung anhand von Zeichnungen beispielhaft näher beschrieben. Dabei zeigen:
Fig. 1 und Fig. 2 eine erste Ausführung eines Isolierschlauchs;
Fig. 3 und 4 eine zweite Ausführung eines Isolierschlauchs.

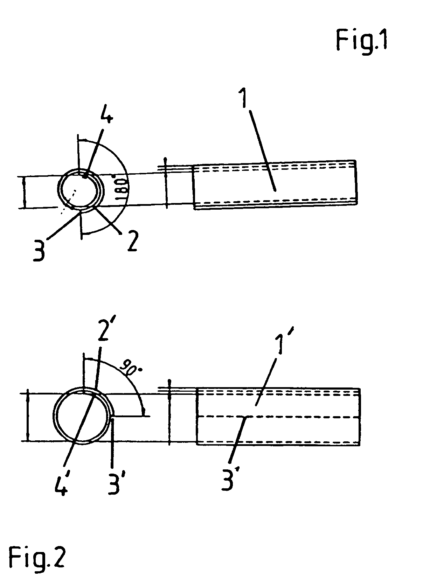

Fig. 1 und 2 zeigen jeweils einen Isolierschlauch 1, bzw. 1'. Er besteht aus einem rund geformten Streifenmaterial mit zwei Kanten 3, 4, bzw. 3', 4'. Diese Kanten stoßen nicht aneinander, sondern überlappen sich um einen bestimmten Abschnitt 2, bzw. 2', der bei Fig. 1 180° und bei Fig. 2 90° beträgt. Dabei ist unerheblich, welche Seite die andere überlappt. Die Überlappungsabschnitte 2, bzw. 2' werden hergestellt, indem ein geschlitzter Schlauch, bzw. ein Flachmaterial eingedreht und gleichzeitig thermisch verformt wird. Die hier dargestellten Isolierschläuche 1, 1' können in zwei verschiedenen Größen hergestellt sein. Die Zeichnung kann jedoch auch so gelesen werden, dass Fig. 1 eine Standardgröße ist und Fig. 2 darstellt, wie die Standardgröße durch Einlegen entsprechender oder entsprechend vieler Kabel aufgedehnt wird, so dass der Überlappungsbereich von 180° auf 90° reduziert wird.

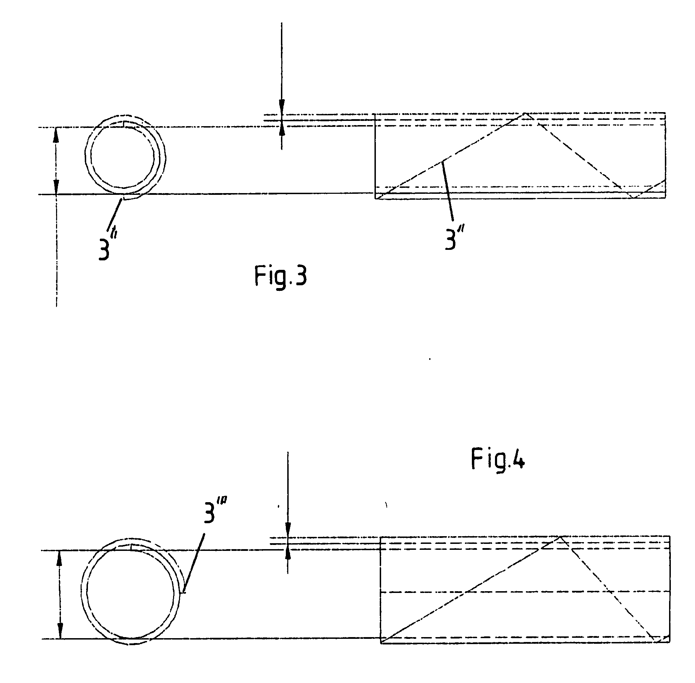

Fig. 3 und 4 stellen grundsätzlich die gleiche Situation wie Fig. 1 und 2 dar. Jedoch ist der Isolierschlauch hier spiralförmig eingedreht, was durch den Verlauf der Kante 3", 3" gezeigt ist. Diese Ausführung gewährleistet eine besonders große Stabilität und ein gesamt besseres Einknickverhalten.

## Patentansprüche

1. Isolierschlauch (1, 1') aus einem thermoplastischen Kunststoffmaterial mit einem durchgehenden Längsschlitz,
**dadurch gekennzeichnet,**
**dass** der Isolierschlauch elastisch und formstabil ausgeführt ist, und dass der Längsschlitz durch einen Abschnitt (2, 2') des Isolierschlauchs in einen Bereich von mindestens 30° bis zu 360° lose überlappt wird und im Überlappungsbereich Haftmittel zwischen der Unterseite des Überlappungsbereichs und der Oberseite des Isolierschlauchs angeordnet sind.

2. Isolierschlauch nach Anspruch 1,
**dadurch gekennzeichnet,**
**dass** der Überlappungsbereich eine konstante Breite aufweist.

3. Isolierschlauch nach Anspruch 1,
**dadurch gekennzeichnet,**
**dass** die Haftmittel selbsthaftend oder durch Druck haftend ausgeführt sind.

4. Isolierschlauch nach Anspruch 1,
**dadurch gekennzeichnet,**
**dass** die Haftmittel ein Klettverschluss sind oder anderweitig aus Haken, Krallen, Ösen oder Schlingen bestehen.

5. Isolierschlauch nach Anspruch 1,
**dadurch gekennzeichnet,**
**dass** die Haftmittel aus miteinander haftenden Filz-, Gewirke- oder Gewebeschichten bestehen.

6. Isolierschlauch nach Anspruch 1,
**dadurch gekennzeichnet,**
**dass** die Haftmittel aus lösbaren Kleberschichten bestehen.

7. Isolierschlauch nach einem der Ansprüche 1 bis 6,
**dadurch gekennzeichnet,**
**dass** die Haftmittel wenigstens an einer Seite in einer Breite ausgeführt sind, dass verschiedene Durchmesser des Isolierschlauchs einstellbar sind.

8. Isolierschlauch nach einem der vorhergehenden Ansprüche,
**dadurch gekennzeichnet,**
**dass** der Isolierschlauch aus einem geschlitzten, thermoplastisch verformten extrudierten Schlauch besteht.

9. Isolierschlauch nach einem der Ansprüche 1 bis 7,
**dadurch gekennzeichnet,**
**dass** der Isolierschlauch aus einem thermoplastisch verformten Streifenmaterial besteht.

10. Isolierschlauch nach einem der vorhergehenden Ansprüche,
**dadurch gekennzeichnet,**
**dass** der Isolierschlauch spiralförmig eingedreht ist.

## Claims

1. An insulation tube (1,1'), made of thermoplastic synthetic material with a slit running long ways through it,
**characterised in that**
the insulation tube is elastic and maintains its shape; the slit running long ways through it is loosely overlapped by a section (2,2') of the insulation tube in an area of between 30 degrees and 360 degrees; and in the overlapping area restraining means are provided between the underside of the overlapping section and the outer side of the insulation tube.

2. An insulation tube according to Claim 1, **characterised in that** the overlapping area has a constant width.

3. An insulation tube according to Claim 1, **characterised in that** the restraining means are self restraining or are provided by pressure.

4. An insulation tube according to Claim 1, **characterised in that** the restraining means are a hook and loop fastener, or otherwise consist of hooks, claws, eyes or loops.

5. An insulation tube according to Claim 1, **characterised in that** the restraining means consists of layers of felt, worked or woven fabric.

6. An insulation tube according to Claim 1, **characterised in that** the restraining means consists of layers of soluble adhesive.

7. An insulation tube according to any of Claims 1 to 6, **characterised in that** the restraining means, at least on one side, are broad enough to allow for adjustment according to different insulation tube diameters.

8. An insulation tube according to any preceding claim, **characterised in that** the insulation tube consists of a slitted, thermoplastically deformed and extruded tube.

9. An insulation tube according to any of Claims 1 to 7, **characterised in that** the insulation tube consists of a thermoplastically deformed strip of material.

10. An insulation tube according to any preceding claim, **characterised in that** the insulation tube is wound in a spiral.

## Revendications

1. Tuyau isolant (1, 1') en matière thermoplastique comportant une fente longitudinale continue, **caractérisé en ce que** le tuyau isolant est réalisé de façon à être élastique et à avoir une forme stable, et **en ce que** la fente longitudinale est recouverte de façon lâche par une portion (2, 2') du tuyau isolant dans une région allant d'au moins 30° à 360° et, dans la région de recouvrement, des moyens adhésifs sont placés entre le côté inférieur de la région de recouvrement et le côté supérieur du tuyau isolant.

2. Tuyau isolant selon la revendication 1, **caractérisé en ce que** la région de recouvrement a une largeur constante.

3. Tuyau isolant selon la revendication 1, **caractérisé en ce que** les moyens adhésifs sont autoadhésifs ou sont réalisés de façon à être adhésifs par pression.

4. Tuyau isolant selon la revendication 1, **caractérisé en ce que** les moyens adhésifs sont une fermeture autoagrippante ou bien sont constitués de crochets, de griffes, d'oeillets ou de lacets.

5. Tuyau isolant selon la revendication 1, **caractérisé en ce que** les moyens adhésifs sont constitués de couches de feutre, de mailles ou de tissu adhérant l'une à l'autre.

6. Tuyau isolant selon la revendication 1, **caractérisé en ce que** les moyens adhésifs sont constitués de couches d'adhésif détachables.

7. Tuyau isolant selon l'une des revendications 1 à 6, **caractérisé en ce que** les moyens adhésifs sont placés au moins sur un côté, dans une largeur et **en ce que** l'on peut régler différents diamètres du tuyau isolant.

8. Tuyau isolant selon l'une des revendications précédentes, **caractérisé en ce que** le tuyau isolant est constitué d'un tuyau fendu extrudé et déformé de façon thermoplastique.

9. Tuyau isolant selon l'une des revendications 1 à 7, **caractérisé en ce que** le tuyau isolant est constitué d'un matériau en bande déformé de façon thermoplastique.

10. Tuyau isolant selon l'une des revendications précédentes, **caractérisé en ce que** le tuyau isolant est enroulé en spirale.
